# DEMANDE DE BREVET EUROPEEN

(11) **EP 2 546 101 A1**
(43) Date de publication de la demande: **16.01.2013**
(21) Numéro de dépôt: 12176004.5
(22) Date de dépôt: 11.07.2012
(51) Int. Cl.: B60P 3/077, B60T 3/00

(54) **Cale à degrés auto stabilisée, pour sécuriser le stationnement d'un véhicule, notamment une autocaravane**

(30) Priorité: 11.07.2011 FR 1156272
(71) Demandeur: Narbonne Accessoires, 11100 Narbonne (FR)
(72) Inventeur: Froment, Mathieu, 11100 Narbonne (FR)
(74) Mandataire: Hamann, Jean-Christophe

(57) **Abrégé**

L'invention concerne une cale (200) pour véhicule, ladite cale étant en forme de coin à degrés et comportant :
a. une surface (210), dite semelle, constituant un plan (211) d'appui ;
b. une surface (220), dite de pose, apte à recevoir une roue du véhicule, ladite surface présentant une intersection avec le plan d'appui (211) à une première extrémité (201) longitudinale de la cale ;
c. la surface (220) de pose comprenant une pluralité de degrés de posage comportant des surfaces de réception (222, 223, 224) définissant des plans (212, 213, 214) de pose répartis longitudinalement en altitudes (2121, 2131, 2141) croissantes par rapport au plan (211) d'appui en partant de cette première extrémité (201) longitudinale ;
d. telle que chaque degré de posage décrit une surface de réception cylindrique concave, deux surfaces de réception successives étant séparées par un profil dit d'arrêt comprenant un sommet (231, 232, 233) dont l'altitude est supérieure à celle des plans de pose des deux surfaces de réception successives.

## Description

L'invention concerne une cale à degrés auto stabilisée, pour sécuriser le stationnement d'un véhicule, notamment une autocaravane. Elle est applicable pour sécuriser le stationnement de tout véhicule tout en permettant la mise à niveau, c'est-à-dire, l'orientation du plancher dudit véhicule par rapport au terrain de stationnement. Ainsi, l'invention est plus particulièrement, mais non exclusivement destinée au domaine des véhicules de loisirs. La présente invention s'applique, par exemple, également aux véhicules de chantier ou aux véhicules d'intervention d'urgence, et plus généralement chaque fois qu'il sera nécessaire, rapidement et de manière provisoire, de sécuriser le stationnement et de caler le niveau desdits véhicules.

Selon l'art antérieur, il est connu d'utiliser des cales en forme de coin, placées sous les roues d'un véhicule pour en sécuriser le stationnement. De telles cales sont généralement placées manuellement, en engageant la pointe du coin sous la roue alors que le véhicule est à l'arrêt. Ces cales de l'art antérieur ne permettent que de sécuriser le stationnement du véhicule et non de le mettre de niveau, et ne peuvent sécuriser ce stationnement que dans un sens de déplacement par cale.

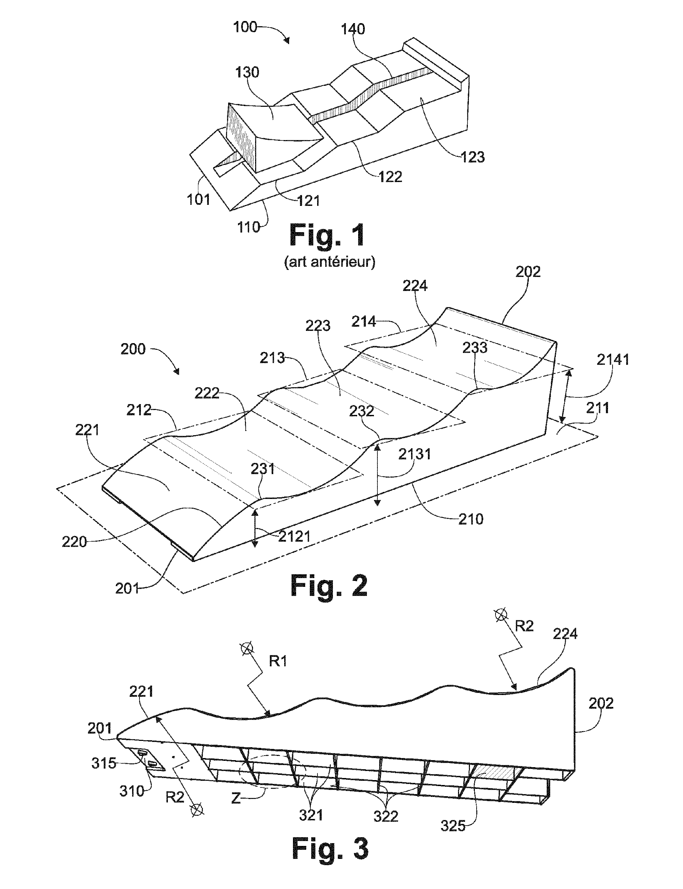

Des cales de mise à niveau sont également connues de l'art antérieur. Une telle cale (100) est représentée figure 1. Ladite cale de mise à niveau comprend une semelle (110) définissant un plan d'appui, et une succession de degrés de posage formant des paliers (121, 122, 123), ou gradins, et comprenant chacun une surface de réception plane définissant un plan de pose, lesdits paliers étant répartis longitudinalement selon des altitudes croissantes par rapport au plan d'appui en partant de la première extrémité (101) longitudinale de la cale, les surfaces de réception planes des paliers étant jointes par des pans inclinés. L'utilisateur de l'autocaravane pose ces cales sous une roue du véhicule et grimpe successivement sur les paliers par la motricité dudit véhicule jusqu'à atteindre le niveau désiré. Les freins du véhicule étant serrés, ledit véhicule est sécurisé dans cette position par l'installation de moyens de calage supplémentaires, dits contre-cale (130), derrière les roues se trouvant sur les cales à gradins. Ces moyens de calage supplémentaires (130) constituent des pièces supplémentaires qui présentent un encombrement et qu'il faut ranger dans le véhicule. Leur installation derrière les roues alors que le véhicule est en place sur un palier de la cale à gradins présente des risques de blessures pour l'utilisateur. Des moyens (140) de liaison amovibles, de résistance mécanique suffisante, doivent également être prévus pour solidariser la cale à gradins et les moyens (130) de calage complémentaires, ce qui rend lesdites cales complexes et d'un coût de fabrication élevé. De plus ces moyens de liaison (140) sont sensibles à l'encrassement et à l'usure par le contact avec les pneumatiques du véhicule et les conditions d'utilisation en extérieur. Lors d'un séjour prolongé sur une telle cale, il arrive que, la pression de gonflage des pneumatiques ayant tendance à baisser, ceux-ci fassent l'objet d'une déformation locale, par la formation d'un plat, qui accélère l'usure dudit pneumatique et affecte le confort du véhicule sur route, voir peut rendre ledit pneumatique impropre à l'usage et nécessiter son changement.

Pour résoudre les inconvénients de l'art antérieur, l'invention propose une cale pour véhicule, ladite cale étant en forme de coin à degrés et comportant :
a. une surface, dite semelle, constituant un plan d'appui ;
b. une surface, dite de pose, apte à recevoir une roue du véhicule, ladite surface présentant une intersection avec le plan d'appui à une première extrémité longitudinale de la cale ;
c. la surface de pose comprenant une pluralité de degrés de posage comportant des surfaces de réception définissant des plans de pose répartis longitudinalement en altitude croissante par rapport au plan d'appui en partant de cette première extrémité longitudinale ;
d. **caractérisée en ce que** chaque degré de posage décrit une surface de réception cylindrique concave, deux surfaces de réception successives étant séparées par un profil dit d'arrêt comprenant un sommet dont l'altitude est supérieure à celle des plans de pose des deux surfaces de réception successives.

Ainsi, la forme cylindrique concave de la surface de réception et le relief entre deux degrés permettent de stabiliser la roue du véhicule dans la surface de réception correspondant au degré dans lequel ladite roue se trouve, de sorte qu'aucune contre cale n'est nécessaire. L'installation de la cale objet de l'invention sous la roue d'un véhicule peut se faire entièrement en utilisant la motricité dudit véhicule par le seul conducteur sans que ledit conducteur n'ait à serrer les freins lorsqu'il atteint l'altitude désirée, sans même qu'il n'ait à quitter le volant. De plus, la forme cylindrique des surfaces de réception épousant approximativement la forme du pneumatique du véhicule, le risque de déformation dudit pneumatique lors de séjours prolongés sur la cale est fortement réduit.

L'invention peut être mise en oeuvre selon les modes de réalisation avantageux exposés ci-après lesquels peuvent être considérés individuellement ou selon toute combinaison techniquement opérante.

Avantageusement, le rayon de courbure des parties concaves des surfaces de réception est compris entre 140 mm et 160 mm. De tels rayons permettent d'obtenir les effets techniques visés sans engendrer un encombrement trop élevé de la cale objet de l'invention.

Avantageusement, la semelle comprend des alvéoles. Ainsi cette surface peut être posée sans difficulté et sans risque sur un sol irrégulier, notamment caillouteux.

Selon un mode de réalisation avantageux de la cale objet de l'invention, la surface de pose est constituée d'une feuille pleine reproduisant le profil de la dite surface de pose, renforcée par des nervures s'étendant entre ladite feuille et la surface constituant le plan d'appui. Ainsi réalisée, la cale objet de l'invention est à la fois résistante et légère. En outre, la surface de pose ne comprend aucun évidement ou interstice dans lesquels des salissures pourraient s'introduire.

Avantageusement, les espaces compris entre les nervures au niveau du plan d'appui forment les alvéoles de la semelle. Ainsi, le coût de fabrication d'une telle cale est réduit.

Avantageusement, la cale objet de l'invention comprend des moyens formant des crampons entre les alvéoles. Selon ce mode réalisation la surface d'appui est adaptée à toutes les natures de terrain : plan ou irrégulier, dur ou souple, par la coopération entre les alvéoles et les crampons.

Selon un mode de réalisation particulièrement avantageux de la cale objet de l'invention, la surface de pose comprend une portion cylindrique convexe entre la première extrémité longitudinale et la surface de réception du premier degré. Cette surface facilite la montée de la roue jusqu'au premier degré et stabilise la cale durant cette montée.

Avantageusement, la surface de pose comprend entre la surface de réception du dernier degré et la deuxième extrémité longitudinale de la cale une portion cylindrique concave reproduisant en creux la forme de la portion cylindrique convexe de la première extrémité longitudinale. Ainsi, deux cales peuvent être facilement empilées l'une sur l'autre, « tête bêche », notamment en vue de leur rangement.

Avantageusement, la cale objet de l'invention comprend à sa première extrémité longitudinale des moyens pour fixer de manière amovible une plaque anti-glissement. Ainsi, la montée sur la cale par la motricité du véhicule est facilitée.

Selon un mode de réalisation avantageux, pour chaque degré de posage de la cale objet de l'invention, la profondeur du plan de pose dudit degré en regard du sommet le moins élevé est supérieure à 15 % de la différence de hauteur des deux sommets délimitant ledit degré. Ainsi, la roue est stabilisée lorsqu'elle est posée dans ledit degré de posage.

Avantageusement, la longueur de l'arc de la surface de réception cylindrique de chaque degré de posage est égale ou supérieure à 20 % de la longueur totale de ladite cale. Ainsi, la longueur des surfaces de réception est suffisante pour stabiliser la roue dans l'emplacement.

Avantageusement, les angles délimitant les extrémités de l'arc de la surface de réception cylindrique de chaque degré de posage par rapport à la verticale lorsque la cale est posée au sol sont tels que lesdits angles sont supérieurs à l'angle formé entre l'horizontale et la semelle. Ainsi, la composante de poids du véhicule appliquée sur la cale par l'intermédiaire de la roue dudit véhicule, posée de manière statique dans la surface de réception, est toujours contenue entre les extrémités de l'arc de la dite surface de réception.

Les caractéristiques ci-avant coopèrent pour assurer la stabilité du véhicule posé sur la cale objet de l'invention, notamment, afin que le poids du véhicule soit toujours appliqué à l'intérieur du polygone de sustentation constitué par la semelle de la cale objet de l'invention.

L'invention est exposée ci-après selon ses modes de réalisation préférés, nullement limitatifs, et en référence aux figures 1 à 6 dans lesquelles :
- la figure 1, relative à l'art antérieur, représente une cale à palier ou gradins et sa contre cale en perspective selon un point de vue en élévation ;
- la figure 2 montre un exemple de réalisation de la cale objet de l'invention en perspective selon un point de vue de face ;
- la figure 3 est une vue en perspective selon un point de vue de profil et de dessous d'un exemple de réalisation d'une cale selon l'invention ;
- la figure 4 est une vue de détail selon Z, défini figure 3, montrant un, détail de réalisation de la face d'appui d'une cale selon un exemple de réalisation de l'invention ;
- la figure 5, représente un exemple de réalisation de la cale objet de l'invention combinée à une plaque anti-glissement, figure 5A en vue de dessous en et en perspective et figure 5B selon une perspective avec un point de vue de face ;
- la figure 6, montre un exemple d'emboîtement de deux cales réalisées selon l'invention en vue de leur rangement ;
- et la figure 7, montre sur une vue de profil de la cale objet de l'invention, les constructions géométriques du profil de ladite cale selon un exemple avantageux de réalisation de celle-ci.

Figure 2, selon un exemple de réalisation de l'invention, la cale (200) à degrés comprend une semelle (210) et une surface de pose (220), s'étendant entre une première (201) et une seconde (202) extrémités longitudinales. La semelle repose sur un plan d'appui (211), matérialisé par le sol. Lors de la mise à niveau du véhicule celui-ci grimpe sur la cale (200) en partant de la première extrémité (201) longitudinale et en allant vers la seconde extrémité (202). La surface de pose (220) comprend différent degrés, correspondant à des plans de pose (212, 213, 214) situés à des altitudes (2121, 2131, 2141) croissantes en référence au plan d'appui (211) de la première extrémité (201) à la seconde extrémité (202) longitudinales. Chaque plan de pose (212, 213, 214) est parallèle au plan d'appui (211) et tangent au fond d'une surface (222, 223, 224) cylindrique de réception, concave, apte à recevoir la roue d'un véhicule. Chaque surface de réception (222, 223, 224) est séparée longitudinalement de la surface de réception suivante par un profil d'arrêt sensiblement cylindrique mais convexe dont le sommet (231, 232, 233) est à une altitude plus élevée que les plans de pose des deux surfaces de réception successives reliées par ledit profil. La première surface de réception (221) de la surface de pose (220) en partant de la première extrémité longitudinale (201) est également de forme cylindrique mais convexe. Cette première portion de la surface de pose facilite ainsi la montée de la roue du véhicule jusque sur le premier degré de la cale.

Figure 2, selon un mode de réalisation particulier, les surfaces de réception (222, 223, 224) sont des cylindres à base circulaire dont les rayons (R1, R2) sont adaptés rayon des roues du véhicule soit compris entre 140 mm et 160 mm de sorte à ce que lesdites surfaces de réception soient enveloppantes de la roue compte tenu de la flexibilité des pneumatiques, présentent un creux suffisant pour stabiliser la roue sur la cale, tout en conservant la cale dans un encombrement raisonnable. Ainsi, de manière surprenante les effets techniques visés sont obtenus avec des rayons de courbure de la surface de réception dont l'ordre de grandeur est la moitié du rayon de la roue du véhicule.

Avantageusement le rayon (R2) de la première surface (221) de réception, convexe, est le même que celui de la dernière surface de réception (224) concave

La cale objet de l'invention est avantageusement constituée d'une matière plastique. La surface de pose est constituée par une feuille pleine d'épaisseur appropriée renforcée par des nervures (321, 322) constituée par des plaques planes s'étendant longitudinalement (321) ou transversalement (322) entre ladite feuille de la surface de pose et le plan d'appui. Ainsi, au niveau de la semelle, ces nervures délimitent des alvéoles. (325). Ces ouvertures dans la semelle permettent de poser la cale objet de l'invention sur un terrain irrégulier, caillouteux ou relativement meuble.

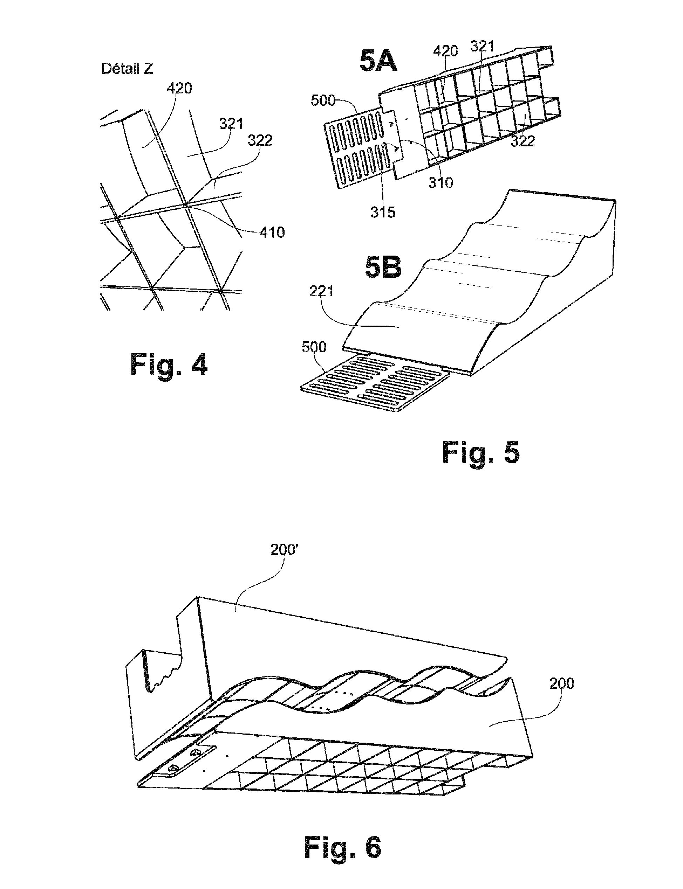

Figure 4, un détail de la vue de la figure 3 met en évidence la face inférieure de la feuille (420) matérialisant la surface de pose et les nervures (321, 322) qui s'étendent de cette face inférieure de ladite feuille (420) jusqu'au plan d'appui. À chaque intersection desdites nervures qui délimitent les alvéoles de la semelle au niveau du plan d'appui est placé un crampon (410) ici sous la forme d'un picot cylindrique. Ces crampons (410) permettent d'améliorer la stabilité de la cale, notamment sur terrain meuble, lorsque le véhicule grimpe sur celle-ci.

En revenant à la figure 3, la semelle comporte au voisinage de la première extrémité longitudinale (201) une mortaise (310) comprenant au fond de celle-ci des reliefs (315) en protrusion, dits reliefs d'accrochage, de forme prismatique dans cet exemple de réalisation.

Figure 5A, les reliefs d'accrochage (315) et la mortaise (310) coopèrent pour permettre la fixation d'une plaque (500) anti-glissement. Figure 5B, cette plaque (500) anti-glissement vient ainsi se placer sur le sol juste devant la première surface de réception (221) convexe.

Figure 6, avantageusement, le profil de la surface de pose permet l'emboîtement, l'une sur l'autre de deux cales (200, 200') objet de l'invention en mettant en contact les surfaces de pose respectives desdites cales et en faisant coïncider la première extrémité longitudinale de l'une avec la seconde extrémité longitudinale de l'autre.

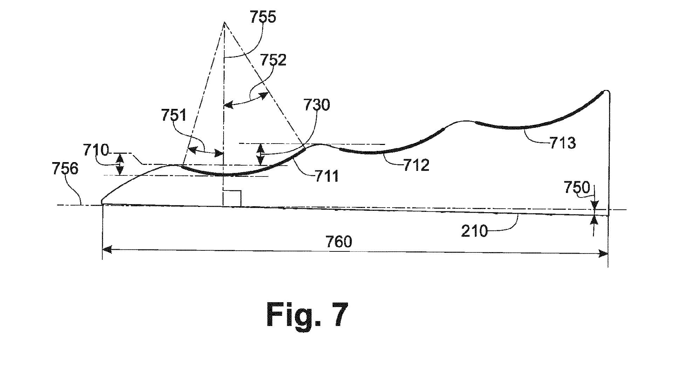

Figure 7, selon un exemple de réalisation particulièrement avantageux, la géométrie de la cale objet de l'invention est optimisée de sorte à permettre le meilleur compromis entre compacité et stabilité. Ainsi, pour chaque degré de posage, la profondeur (710) du plan de pose dudit degré en regard du sommet le moins élevé est supérieure à 15 % de la différence (730) de hauteur des deux sommets délimitant ledit degré. La longueur des arcs (711, 712, 713) correspondant aux surfaces cylindriques de réception est également choisie de sorte à stabiliser la roue du véhicule dans chaque logement, ainsi que pour assurer une application du poids supporté par la cale dans le polygone de sustentation délimité par la semelle de ladite cale, de sorte à éviter tout risque de basculement. Ainsi, un arc (711, 712, 713) étant compris entre deux angles (751, 752) mesurés de part et d'autre de la verticale (755), chacun de ces angles (751, 752) est supérieur à l'angle (750) formé par la semelle (210) et l'horizontale (756). La composante statique du poids du véhicule, appliquée sur la cale lorsque la roue dudit véhicule est posée dans une des surfaces de réception cylindrique, par exemple celle correspondant au premier degré figure 7, s'applique selon l'intersection entre la direction verticale (755) de la gravité et ledit arc (711). Le positionnement de cet arc par rapport à la semelle fait que ce point d'application tombe dans une position de l'arc où la profondeur (710) du plan de pose dudit degré est au moins égale à 15 % de la hauteur (730) des deux sommets des profils d'arrêt délimitant ledit degré.

La description ci-avant et les exemples de réalisation montrent que l'invention atteint les objectifs visés, en particulier, la cale objet de l'invention permet le calage du niveau d'un véhicule, notamment une autocaravane, par une seule personne en toute sécurité.

## Revendications

1. Cale (200) pour véhicule, ladite cale étant en forme de coin à degrés et comportant :
a. une surface (210), dite semelle, constituant un plan (211) d'appui ;
b. une surface (220), dite de pose, apte à recevoir une roue du véhicule, ladite surface présentant une intersection avec le plan d'appui (211) à une première extrémité (201) longitudinale de la cale ,
c. la surface (220) de pose comprenant une pluralité de degrés de posage comportant des surfaces de réception (222, 223, 224) définissant des plans (212, 213, 214) de pose répartis longitudinalement en altitudes (2121, 2131, 2141) croissantes par rapport au plan (211) d'appui en partant de cette première extrémité (201) longitudinale ;
d. **caractérisée en ce que** chaque degré de posage décrit une surface de réception cylindrique concave, dont le rayon de courbure est compris entre 140 mm et 160 mmm, deux surfaces de réception successives étant séparées par un profil dit d'arrêt comprenant un sommet (231, 232, 233) dont l'altitude est supérieure à celle des plans de pose des deux surfaces de réception successives.

2. Cale selon la revendication 1, **caractérisée en ce que** la semelle (210) comprend des alvéoles (315).

3. Cale selon la revendication 1, **caractérisée en ce que** la surface de pose est constituée d'une feuille (420) pleine reproduisant le profil de la dite surface (220) de pose, renforcée par des nervures (321, 322) s'étendant entre ladite feuille et la semelle (210).

4. Cale selon les revendications 2 et 3, **caractérisée en ce que** les espaces compris entre les nervures (321, 322) au niveau de la semelle forment les alvéoles (325) de ladite semelle.

5. Cale selon la revendication 2 **caractérisée en ce qu'**elle comprend des moyens (410) formant des crampons entre les alvéoles (325).

6. Cale selon la revendication 1, **caractérisée en ce que** la surface de pose comprend une portion (221) cylindrique convexe entre la première extrémité (201) longitudinale et la surface (222) de réception du premier degré.

7. Cale selon la revendication 6, **caractérisée en ce que** la surface de pose comprend entre la surface de réception (224) du dernier degré et la seconde extrémité (202) longitudinale de la cale une portion cylindrique concave reproduisant en creux la forme de la portion cylindrique convexe (221) de la première extrémité (201) longitudinale.

8. Cale selon la revendication 1, **caractérisé en ce qu'**elle comprend à sa première extrémité longitudinale des moyens (310, 315) pour fixer de manière amovible une plaque (500) anti-glissement.

9. Cale selon la revendication 1, **caractérisée en ce que** pour un degré de posage, la profondeur (710) du plan de pose dudit degré en regard du sommet (231, 232, 233) le moins élevé des sommets délimitant ledit degré, est supérieure à 15 % de la différence (730) de hauteur des deux sommets délimitant ledit degré.

10. Cale selon la revendication 1, **caractérisée en ce que** la longueur de l'arc (711, 712, 713) de la surface de réception cylindrique de chaque degré de posage est égale ou supérieure à 20 % de la longueur totale (760) de ladite cale.

11. Cale selon la revendication 1, **caractérisée en ce que** les angles (751, 752) délimitant les extrémités de l'arc de la surface de réception cylindrique de chaque degré de posage par rapport à la verticale (755), lorsque la cale est posée au sol sont tels que lesdits angles sont supérieurs à l'angle (750) formé entre l'horizontale (756) et la semelle (210).
